Europäisches Patentamt

European Patent Office

Office européen des brevets

(19)

(11) Veröffentlichungsnummer: **0 004 890**
**A1**

(12) ## EUROPÄISCHE PATENTANMELDUNG

(21) Anmeldenummer: 79100969.9

(22) Anmeldetag: 30.03.79

(51) Int. Cl.²: **B 65 G 25/02**

(30) Priorität: 25.04.78 DE 2818010

(43) Veröffentlichungstag der Anmeldung:
31.10.79 Patentblatt 79/22

(84) Benannte Vertragsstaaten:
BE CH FR GB IT LU NL

(71) Anmelder: Licentia Patent-Verwaltungs-GmbH
Theodor-Stern-Kai 1
D-6000 Frankfurt/Main 70(DE)

(84) Benannte Vertragsstaaten:
BE CH FR GB IT LU NL

(71) Anmelder: M.A.N. Lager- und Systemtechnik GmbH
Postfach 500441 Ehrenbreitsteiner Strasse 44
D-8000 München 50(DE)

(84) Benannte Vertragsstaaten:
BE CH FR GB IT LU NL

(72) Erfinder: Flitsch, Hans
Wagnerstrasse 17
D-6074 Rödermark (Urberach)(DE)

(72) Erfinder: Martin, Gerd
Waldfriedhofstrasse 64
D-8000 München 70(DE)

(72) Erfinder: Baumann, Manfred
Tannenstrasse 19
D-8031 Puchheim(DE)

(72) Erfinder: Janka, Helmut
Sommerhalde 1
D-7244 Waldachtal 2(DE)

(54) Fördereinrichtung zum schrittweisen Bewegen von Stückgut.

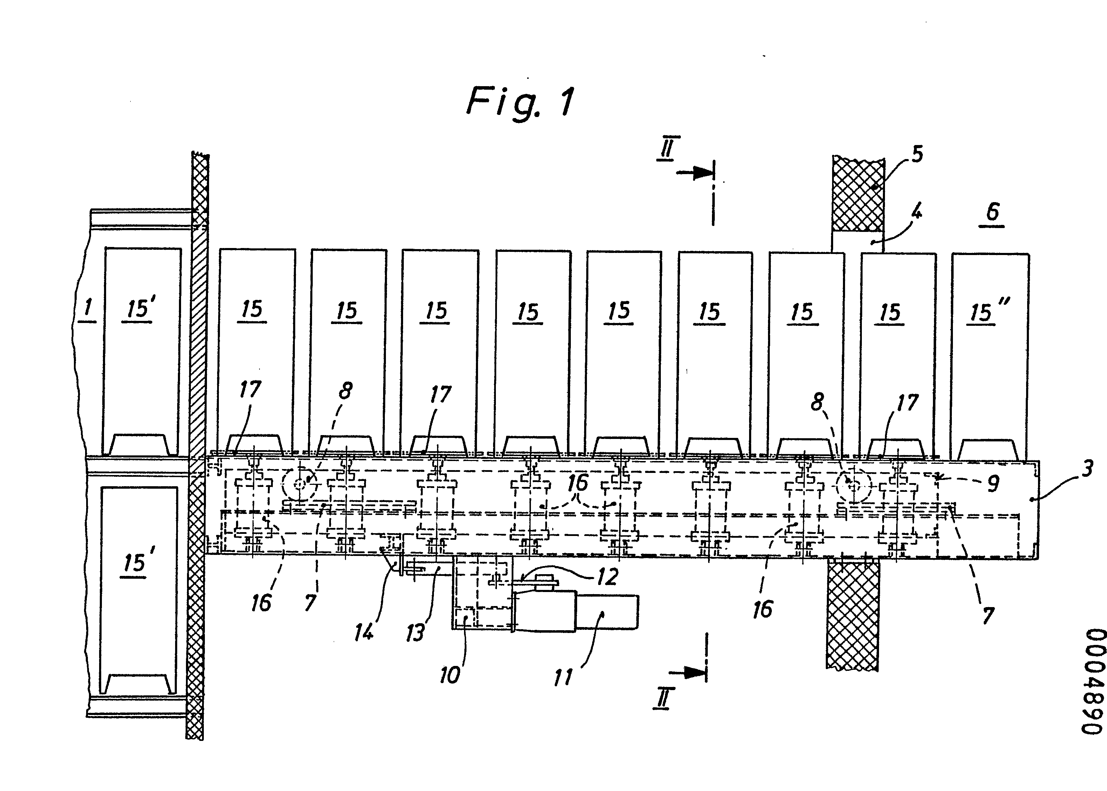

(57) Fördereinrichtung zum schrittweisen Bewegen von Stückgut nahezu gleicher Größe, insbesondere Paletten oder Behälter, welche zwischen einer oder mehreren Aufgabepositionen und einer Abnahmestelle vorgesehen ist, und bei der in einem selbsttragenden, mit Abstellschienen für die Stückgüter (15) versehenen Führungsrahmen (3) ein jeweils um einen der Größe des Stückgutes (15) entsprechenden Schritt in Förderrichtung hin- und zurückverfahrbarer Transportrahmen (9) angeordnet ist, wobei auf dem Transportrahmen (9) über seine gesamte Länge in Abständen von jeweils einem Schritt Hubmittel (16) vorgesehen sind, durch die alle Stückgüter (15) oder jeweils nur ein Teil derselben einzeln, aber gleichzeitig anhebbar sind. Durch die Fördereinrichtung wird erreicht, daß das an den Aufgabepositionen aufgebrachte Stückgut im Takt jeweils um einen der Größe des Stückgutes entsprechenden Schritt in Richtung zur Abnahmestelle versetzt wird, so daß ein geschlossener Fördergutstrom entsteht (Figure 1).

./...

Fig. 1

-/-

M.A.N. Lager- und Systemtechnik GmbH, 8ooo München 5o
und
Licentia Patent-Verwaltungs-GmbH, 6ooo Frankfurt/M. 7o

Nürnberg, 16. Februar 1979

**Fördereinrichtung zum schrittweisen Bewegen von Stückgut**

Die Erfindung betrifft eine Fördereinrichtung zum schrittweisen Bewegen von Stückgut nahezu gleicher Größe, insbesondere Paletten oder Behälter, welche zwischen einer oder
mehreren Aufgabepositionen und einer Abnahmestelle angeordnet ist.

Fördereinrichtungen, die sich zum Teil schrittweise vorwärts bewegen, sind bis jetzt nur in Form von Förderbändern
oder Rollenförderern bekannt, wobei das Anhalten und
Weitertransportieren drehmomentabhängig, mittels Fotozellen o.ä. gesteuert wird. Das Anhalten erfolgt jeweils,
wenn eines oder mehrere der transportierten Teile, meist
sind es kleinere Teile, die Abnahmestelle erreicht haben.
Ein Zwischenschieben von Teilen oder ein Auffüllen von
etwaigen Lücken auf diesen Einrichtungen ist nicht möglich.

o8.8598

./.

Hier setzt die Erfindung ein, der die Aufgabe zugrunde liegt, eine Fördereinrichtung der eingangs erwähnten Art zu schaffen, durch die das an den Aufgabepositionen aufgebrachte Stückgut im Takt jeweils um einen der Größe des Stückgutes entsprechenden Schritt in Richtung zur Abnahmestelle versetzbar ist, so daß an sich ein geschlossener Fördergutstrom entsteht, wobei jedoch auch vorhandene Lücken geschlossen oder bewußt nach Belieben freie Stellplätze geschaffen werden können.

Nach der Erfindung wird die Aufgabe dadurch gelöst, daß in einem selbsttragenden, mit Abstellschienen für die Stückgüter versehenen Führungsrahmen ein jeweils um einen der Größe des Stückgutes entsprechenden Schritt in Förderrichtung hin- und zurückverfahrbarer Transportrahmen angeordnet ist, und daß auf dem Transportrahmen über seine gesamte Länge in Abständen von jeweils einem Schritt Hubmittel vorgesehen sind, durch die alle Stückgüter oder jeweils nur ein Teil derselben einzeln, aber gleichzeitig anhebbar sind.

Durch die erfindungsgemäße Einrichtung wird es möglich, auch größere Lagergüter je nach Belieben in ein Lager einzuordnen oder aus diesem heraus zur weiteren Verladung zu bringen, wobei auch mehrere Aufgabepositionen vorhanden sein können, denn man kann jederzeit freie Stellplätze zwischen den bereits auf der Fördereinrichtung befindlichen Stückgütern schaffen. Das Aufsetzen des Stückgutes auf das erste, der Aufgabeposition am nächsten liegende Hubmittel kann beispielsweise durch einen auf den Regalförderzeug befindlichen Teleskoptisch erfolgen. Die Abnahmestelle wird erfindungsgemäß durch das Ende des Führungsrahmens gebildet, wobei das

08.8598                                                                    ./.

in Transportrichtung auf dem Transportrahmen zuletzt angeordnete Hubmittel bis unterhalb dieses Endes verfahrbar ist.

Im einzelnen ist der Führungsrahmen in Kastenform ausgebildet und weist an seiner Innenseite in ihrer Länge wenigstens einen Transportschritt entsprechende Führungsschienen auf, auf denen der Transportrahmen mittels Tragrollen verfahrbar ist. Zweckmäßigerweise werden zumindest an einer Seite des Transportrahmens auch noch um senkrechte Achsen drehbare, seitlich an den Führungsschienen ablaufende Führungsrollen vorgesehen.

Die Hubmittel sind erfindungsgemäß als hydraulisch oder pneumatisch betätigbare Hubzylinder ausgebildet und tragen jeweils am freien Ende ihrer Kolbenstange eine das Stückgut aufnehmende Plattform. Es fällt jedoch durchaus unter die Erfindung, wenn als Hubmittel elektromotorisch angetriebene, im Transportrahmen geführte Stempel vorgesehen werden.

Im allgemeinen wird man alle vorhandenen Hubmittel gleichzeitig betätigen, so daß die auf den Abstellschienen des Führungsrahmens befindlichen Stückgüter gemeinsam angehoben, durch Verfahren des Transportrahmens um einen Schritt vorwärts bewegt und dann wieder abgesetzt werden. Die Steuerung für die Hubmittel ist jedoch für alle Fälle so ausgelegt, daß auch eine beliebig auswählbare Anzahl, d.h. nur ein Teil davon gleichzeitig betätigbar ist. Hierdurch wird es möglich, vorhandene Lücken im Förderstrom zu schließen oder auch zwischendurch freie Stellplätze zu schaffen. Es ist also ein beliebiger Transport je nach den Verhält-

./.

nissen einstellbar.

Als Weiterbildung der Erfindung wird vorgeschlagen, daß der Transportrahmen durch einen Elektromotor über eine Exzenterscheibe, Kulisse und eine Schubstange hin- und zurückfahrbar ist, wobei der Motor jeweils nach einer Drehbewegung der Exzenterscheibe um 180° automatisch geschaltet wird. Ein solcher Motor hat den Vorteil, daß die Beschleunigung und die Verzögerung von Null bis zu einem Maximum und umgekehrt stufenlos erfolgt, es ergibt sich also eine sinusförmiger Geschwindigkeitsverlauf. Diese Antriebsform soll jedoch nicht unbedingt bindend sein, es kann ebenso auch ein hydraulisch oder pneumatisch betätigbarer Hubzylinder vorgesehen werden, der einerseits am Führungsrahmen und andererseits am Transportrahmen abgestützt ist.

Weitere Einzelheiten der Erfindung können der nachfolgenden Beschreibung eines in den Zeichnungen dargestellten Ausführungsbeispieles entnommen werden. Es zeigen:

Fig. 1 eine Fördereinrichtung nach der Erfindung von der Seite gesehen,

Fig. 2 einen Schnitt II-II durch die Fördereinrichtung nach Fig. 1,

Fig. 3 einen Schnitt III-III durch die Fördereinrichtung nach Fig. 2.

In Fig. 1 ist ein Lagerraum 1, der gleichzeitig die Aufgabeposition darstellt, durch eine Regalstütze 2 angedeutet. Unmittelbar an die Regalstütze 2 schließt ein waagrecht verlaufender, kastenförmig ausgebildeter und an der Oberseite zum Teil offener Führungsrahmen 3 an, der im Beispiel

0004890

durch eine Ausnehmung 4 in einer Wand 5 hindurch
bis zu einer Abnahmestelle 6 führt. Im Führungsrahmen 3
sind jeweils die Länge eines Transportschrittes aufweisende Führungsschienen 7 befestigt, auf denen mittels
Tragrollen 8 ein Transportrahmen 9 hin- und her verfahrbar gelagert ist. Angetrieben wird der Transportrahmen 9
durch einen über Haltemittel 10 am Führungsrahmen 3 befestigten Elektromotor 11, eine Exzenterscheibe 12 und
eine Schubstange 13, die mit ihrem freien Ende schwenkbar an einer Schiene 14 des Transportrahmens 9 befestigt
ist.

Im Lagerraum 1 und auf dem Führungsrahmen 3 befinden
sich Stückgüter 15, 15', 15", wobei unterhalb der Stückgüter 15 am Transportrahmen 9 befestigte, hydraulisch
oder pneumatisch angetriebene Hubzylinder 16 mit jeweils
einer Plattform 17 vorgesehen sind.

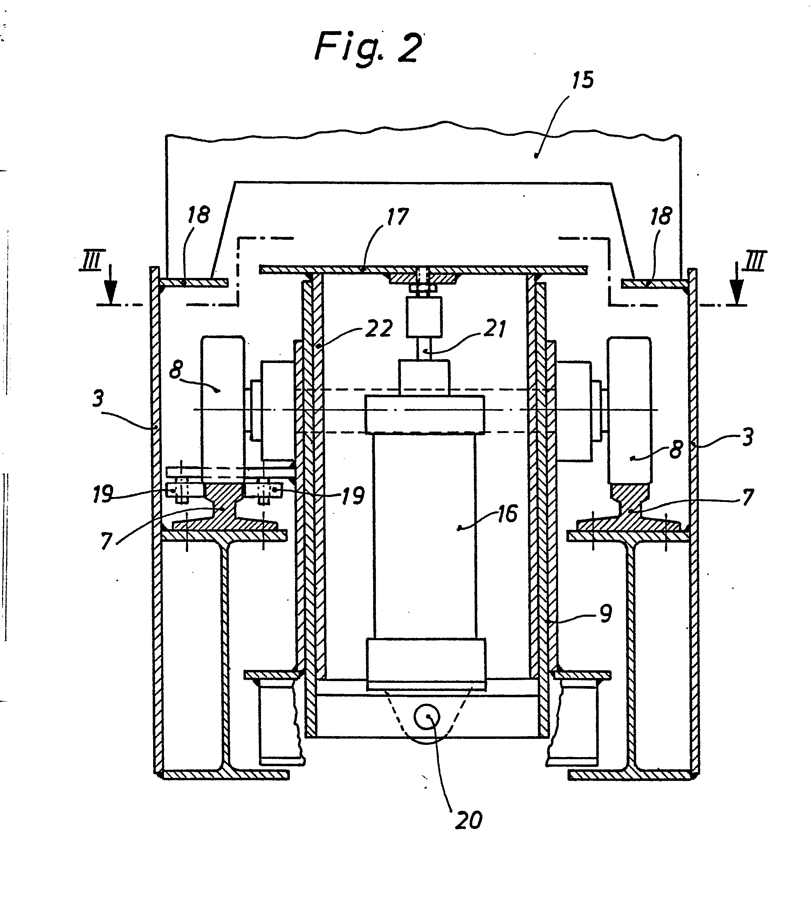

Aus Fig. 2 ist dieser Aufbau genauer zu erkennen. Der
Führungsrahmen 3 weist an seiner Oberseite Abstellschienen 18 für die Stückgüter 15 auf. In ihm sind die
Führungsschienen 7 befestigt, von denen der Transportrahmen 9 über die Tragrollen 8 verfahrbar getragen wird.
Zur seitlichen Führung können, wie strichliert angedeutet
ist, wenigstens an einer Seite des Transportrahmens 9
noch Führungsrollen 19 angebracht sein, die seitlich
an den Führungsschienen 7 abrollen.

Der Hubzylinder 16 ist mit seinem unteren Ende über
ein Gelenk 20 mit dem Transportrahmen 9 verbunden,
während die Plattform 17 am freien Ende der Kolbenstange
21 befestigt und durch ein Rohr 22 verschiebbar geführt
ist.

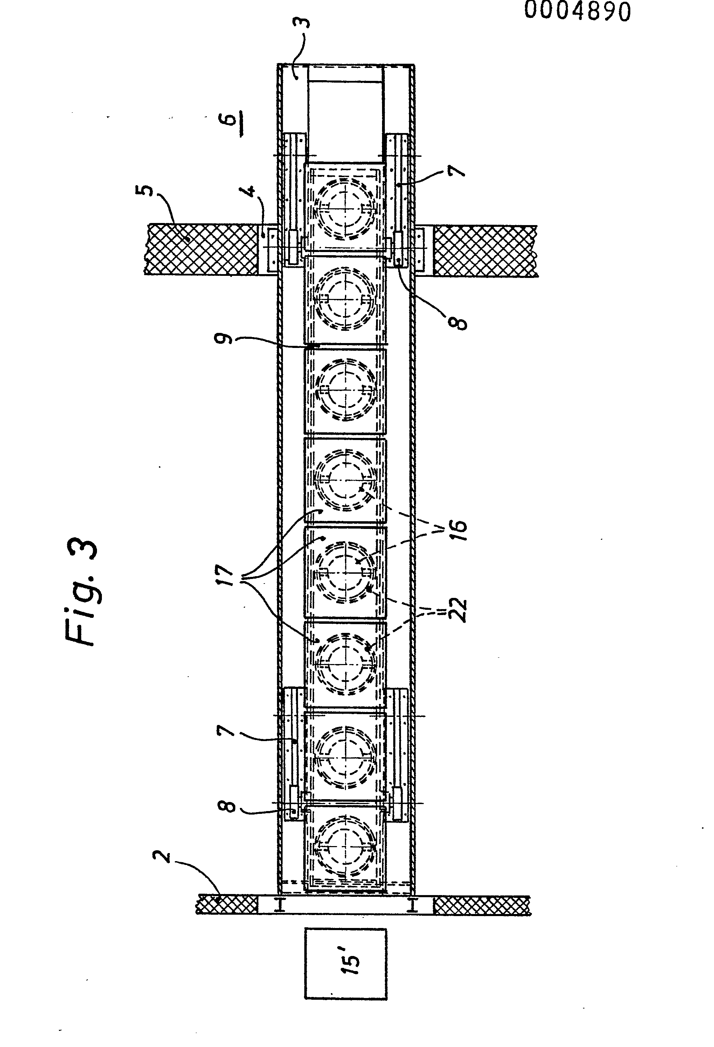

Aus dem in Fig. 3 gezeigten Schnittbild schließlich kann
man die Ausbildung der Plattformen 17 und die Anordnung
der Führungsschienen 7 deutlicher erkennen.

./.

Funktionsweise:

Aus der Aufgabeposition bzw. aus dem Lagerraum 1 wird ein Stückgut 15' beispielsweise mittels des Teleskoptisches eines Regalförderzeuges über den ersten Hubzylinder 16 auf die Abstellschienen 18 gehoben. Sodann wird wenigstens der unter diesem Stückgut 15 befindliche Hubzylinder 16 mit Druck beaufschlagt und hebt es über seine Plattform 17 an. Nun schaltet der Elektromotor 11 ein, der Transportrahmen 9 verschiebt sich um einen Schritt nach rechts bzw. in Richtung zur Abnahmestelle 6. Dort wird das Lagergut 15 abgestellt und der Transportrahmen 9 fährt in seine Ausgangsstellung zurück, wo bereits das nächste Transportgut 15 bereitgestellt wurde. Nach mehrmaligem Wiederholen dieses Vorganges ist die gesamte Fördereinrichtung mit Stückgut 15 belegt und das zuerst aufgebrachte Stückgut 15" gelangt in die Abnahmestellung 6, wo es durch andere Transportvorrichtungen abgehoben und weiterverfrachtet wird. Werden beispielsweise nur einige Hubzylinder 16 mit Druck beaufschlagt, so bleiben die über den nicht beaufschlagten Hubzylindern befindlichen Stückgüter 15 an ihrer Stelle stehen, es entsteht eine Lücke oder es wird eine Lücke aufgefüllt.

0004890

-1-

fo/kr

MAN Lager- und Systemtechnik GmbH, 8000 München 50
und Licentia Patent-Verwaltungs-GmbH,
6000 Frankfurt 70

Nürnberg, 16.2.1979

P a t e n t a n s p r ü c h e

1. Fördereinrichtung zum schrittweisen Bewegen von
Stückgut nahezu gleicher Größe, insbesondere
Paletten oder Behälter, welche zwischen einer
oder mehreren Aufgabepositionen und einer Abnahmestelle angeordnet ist, dadurch gekennzeichnet, daß in einem selbsttragenden, mit Abstellschienen (18) für die Stückgüter (15) versehenen

./.

N88.8598

Führungsrahmen (3) ein jeweils um einen der Größe des Stückgutes (15) entsprechenden Schritt in Förderrichtung hin- und zurückverfahrbaren Transportrahmen (9) angeordnet ist, und daß auf dem Transportrahmen (9) über seine gesamte Länge in Abständen von jeweils einem Schritt Hubmittel (16) vorgesehen sind, durch die alle Stückgüter (15) oder jeweils nur ein Teil derselben einzeln, aber gleichzeitig anhebbar sind.

2. Fördereinrichtung nach Anspruch 1, dadurch gekennzeichnet, daß das in Transportrichtung auf dem Transportrahmen (9) zuletzt angeordnete Hubmittel (16) bis unterhalb der Abnahmestelle (6) verfahrbar ist, und daß die Abnahmestelle (6) durch das Ende des Führungsrahmens (3) gebildet wird.

3. Fördereinrichtung nach Anspruch 1, dadurch gekennzeichnet, daß der Führungsrahmen (3) in Kastenform ausgebildet ist und an seiner Innenseite in ihrer Länge wenigstens einen Transportschritt entsprechende Führungsschienen (7) für den Transportrahmen (9) aufweist, und daß der Transportrahmen (9) mittels Tragrollen (8) auf den Führungsschienen (7) verfahrbar ist.

4. Fördereinrichtung nach den Ansprüchen 1 und 3, dadurch gekennzeichnet, daß der Transportrahmen (9) seitlich an den Führungsschienen (7) anliegende Führungsrollen (19) aufweist.

./.

No8.8598

0004890

-3-

5. Fördereinrichtung nach Anspruch 1, dadurch gekennzeichnet, daß die Hubmittel (16) als hydraulisch oder pneumatisch betätigbare Hubzylinder ausgebildet sind und am freien Ende ihrer Kolbenstange (21) eine das Stückgut (15) aufnehmende Plattform (17) aufweisen.

6. Fördereinrichtung nach Anspruch 1, dadurch gekennzeichnet, daß die Hubmittel (16) als elektromotorisch angetriebene, im Transportrahmen (9) geführte Stempel ausgebildet sind.

7. Fördereinrichtung nach Anspruch 1, dadurch gekennzeichnet, daß die im Transportrahmen (9) angeordneten Hubmittel (16) gemeinsam oder in einer beliebig auswählbaren Anzahl gleichzeitig betätigbar sind.

8. Fördereinrichtung nach Anspruch 1, dadurch gekennzeichnet, daß der Transportrahmen (9) durch einen Elektromotor (11) über eine Exzenterscheibe (12), Kulisse und Schubstange (13) hin- und zurückfahrbar ist.

9. Fördereinrichtung nach den Ansprüchen 1 und 8, dadurch gekennzeichnet, daß zum Antrieb des Transportrahmens (9) ein Drehstrommotor ohne Regelung vorgesehen ist, der in bekannter Weise nach einer Drehbewegung der Exzenterscheibe (12) von 180° automatisch abgeschaltet wird.

1o. Fördereinrichtung nach Anspruch 1, dadurch gekennzeichnet, daß zum Hin- und Zurückfahren des Transportrahmens (9) ein hydraulisch oder pneumatisch betätigbarer Hubzylinder vorgesehen ist.

No. 8598

*Fig. 1*

**Fig. 2**

0004890

Fig. 3

| | Europäisches Patentamt | EUROPÄISCHER RECHERCHENBERICHT | Nummer der Anmeldung<br>EP 79 10 0969 |
|---|---|---|---|

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl.²) |
|---|---|---|---|
| X | DE - A - 2 312 902 (A.E.G. - ELOTHERM)<br><br>* Seite 7, Zeile 21 bis Seite 8, Zeile 7; Figuren; Seite 5, Zeilen 5-17 * | 1,2,5,<br>7,8,10 | B 65 G 25/02 |
| | US - A - 3 322 259 (C.J. MILAZZO)<br><br>* Spalte 5, Zeile 7 bis Spalte 7, Zeile 47; Figuren * | 1,2,5,<br>7,10 | |
| | DE - B - 1 187 543 (M. KRIEGL)<br><br>* Spalte 4, Zeile 52 bis Spalte 5, Zeile 18; Figuren * | 3,4 | RECHERCHIERTE SACHGEBIETE (Int. Cl.²)<br><br>B 65 G<br>B 23 G |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-07-1979 | VAN ROLLEGHEM |

EPA form 1503.1 06.78